# EUROPÄISCHE PATENTSCHRIFT

(11) **EP 2 536 961 B1**
(45) Veröffentlichungstag und Bekanntmachung des Hinweises auf die Patenterteilung: **21.11.2018**
(21) Anmeldenummer: 11711254.0
(22) Anmeldetag: 04.02.2011
(51) Int. Cl.: F16F 15/14

(54) **DREHMOMENTÜBERTRAGUNGSEINRICHTUNG**
TORQUE TRANSMITTER
DISPOSITIF CONVERTISSEUR DE COUPLE

(30) Priorität: 16.02.2010 DE 102010008178
(43) Veröffentlichungstag der Anmeldung: 26.12.2012
(73) Patentinhaber: Schaeffler Technologies AG & Co. KG, 91074 Herzogenaurach (DE)
(72) Erfinder: MAIENSCHEIN, Stephan, 76534 Baden-Baden (DE); BUREN, Annika, 77855 Achern (DE)
(86) Internationale Anmeldenummer: PCT/DE2011/000102
(87) Internationale Veröffentlichungsnummer: WO 2011/100945

(56) Entgegenhaltungen:
- DE-A1- 19 804 227
- DE-A1-102006 028 556
- DE-A1-102008 057 647
- GB-A- 2 413 614

## Beschreibung

Die Erfindung betrifft eine Drehmomentübertragungseinrichtung mit den Merkmalen gemäß dem Oberbegriff von Anspruch 1.

Gattungsgemäße Drehmomentübertragungseinrichtungen sind aus DE 10 2008 057647 A1 und DE 198 04 227 A1 bekannt.

Derartige Drehmomentübertragungseinrichtungen können beispielsweise als allgemein bekannte und insbesondere in einem Kraftfahrzeug Verwendung findende hydrodynamische Drehmomentwandler ausgebildet sein. Solche Drehmomentwandler weisen ein antriebsseitig verbundenes Pumpenrad auf, das einen Fluidstrom in Richtung eines mit einer Abtriebsseite verbundenen Turbinenrads bewirkt und dieses damit antreiben kann. Bevor das Fluid aus dem Turbinenrad in das Pumpenrad zurückströmt, passiert es ein Leitrad und erfährt dadurch in bestimmten Situationen eine Veränderung der Strömungsrichtung, die eine Beeinflussung der Drehmomentübertragung zwischen Pumpenrad und Turbinenrad bewirkt. Auch ist es bekannt, eine Kupplungseinrichtung, beispielsweise eine Überbrückungskupplung in dem Drehmomentwandler zur Umgehung der über das Fluid stattfindenden hydrodynamischen Drehmomentübertragung anzuordnen. Dabei verbindet die Überbrückungskupplung die Antriebsseite, beispielsweise das mit dem Pumpenrad drehfest verbundene Gehäuse wahlweise mit einer Abtriebsseite, beispielsweise einer Getriebeeingangswelle. In solchen Situationen können sich von einer mit dem Gehäuse verbundenen Brennkraftmaschine verursachte Torsionsschwingungen auf die Abtriebsseite übertragen, weshalb üblicherweise ein Torsionsschwingungsdämpfer in dem Kraftfluss zwischen Kupplungsausgang der Überbrückungskupplung und Abtriebsseite zur Dämpfung der Torsionsschwingungen angeordnet ist.

Derartige Torsionsschwingungsdämpfer können mehrstufig, das bedeutet mehrere Dämpferstufen aufweisend ausgeführt sein. Dabei besteht die erste Dämpferstufe üblicherweise aus einem mit dem Kupplungsausgang verbundenen Dämpfereingangsteil, das über die Wirkung von Energiespeicherelementen gegenüber einem Dämpferzwischenteil begrenzt verdrehbar ist. Das Dämpferzwischenteil bildet den Eingang der zweiten Dämpferstufe, die aus weiteren Energiespeicherelementen besteht, die das Dämpferzwischenteil mit einem Dämpferausgangsteil wirksam verbinden. Durch die mehrstufige Ausgestaltung des Torsionsschwingungsdämpfers sind gute Dämpfungseigenschaften möglich, die jedoch unter bestimmten Umständen nicht ausreichen.

So kommt es beispielsweise am Ausgang einer aus drei Zylindern bestehenden Brennkraftmaschine zu erheblichen Torsionsschwingungen auf die Drehmomentübertragungseinrichtung und über diese auf die Abtriebsseite, womit die von üblichen Drehmomentübertragungseinrichtungen erreichbaren Schwingungsdämpfungseigenschaften nicht ausreichen.

Aufgabe der Erfindung ist es daher, eine Drehmomentübertragungseinrichtung mit verbesserten Schwingungsisolationseigenschaften vorzuschlagen.

Erfindungsgemäß wird diese Aufgabe durch eine Drehmomentübertragungseinrichtung mit den Merkmalen gemäß Anspruch 1 gelöst.

Entsprechend wird eine Drehmomentübertragungseinrichtung mit einem antriebsseitig verbundenen Gehäuse und einer darin angeordneten Kupplungseinrichtung sowie einem dieser nachgeschalteten Torsionsschwingungsdämpfer mit wenigstens einem Dämpfereingangsteil, wenigstens ein gegenüber dem Dämpfereingangsteil über die Wirkung von ersten Energiespeicherelementen begrenzt verdrehbares Dämpferzwischenteil sowie ein über die Wirkung von zweiten Energiespeicherelementen gegenüber einem Dämpferzwischenteil begrenzt verdrehbares und abtriebsseitig verbundenes Dämpferausgangsteil aufweisende Dämpferstufen vorgeschlagen, bei der an dem Dämpferausgangsteil ein drehzahladaptives Fliehkraftpendel mit einer gegenüber einem aus dem Dämpferausgangsteil integral ausgebildeten oder an diesem befestigten Pendelflansch begrenzt verlagerbaren Pendelmasse angeordnet ist. Dadurch wird eine bessere Schwingungsisolation der Drehmomentübertragungseinrichtung erreicht. Das Zusammenwirken der Funktionselemente des Torsionsschwingungsdämpfers, bestehend aus Massen und Federn mit dem Tilgungsverhalten des Fliehkraftpendels bewirkt eine verbesserte Isolation der Torsionsschwingungen zwischen Antriebsseite und Abtriebsseite der Drehmomentübertragungseinrichtung.

Die Dämpferstufen können in Reihe oder parallel wirksam geschaltet sein.

In einer weiteren speziellen Ausführung der Erfindung ist der Pendelflansch axial benachbart zu dem Torsionsschwingungsdämpfer angeordnet. Damit kann eine gute Ausnutzung des vorhandenen Bauraums innerhalb des Gehäuses bewirkt werden.

In einer weiteren Ausführungsform der Erfindung sind wenigstens zwei Fliehkraftpendel an dem Dämpferausgangsteil angeordnet, insbesondere mit axial benachbart angeordneten Pendelflanschen. Erfindungsgemäß ist ein weiteres Fliehkraftpendel an dem Dämpferzwischenteil und/oder dem Dämpfereingangsteil angeordnet. Dabei kann der Pendelflansch aus dem Dämpferzwischenteil und/oder dem Dämpfereingangsteil gebildet werden. Auch kann ein jeweils eigener und mit dem entsprechenden Dämpferteil befestigter Pendelflansch vorgesehen sein, an dem die Pendelmassen aufnehmbar sind.

In einer weiteren Ausführungsform der Erfindung sind die ersten Energiespeicherelemente gegenüber den zweiten Energiespeicherelementen radial versetzt angeordnet.

In einer vorteilhaften Ausführung der Erfindung ist die Drehmomentübertragungseinrichtung als hydrodynamischer Drehmomentwandler mit einem in einem Gehäuse angeordneten Pumpenrad sowie einem Turbinenrad und gegebenenfalls einem Leitrad ausgestaltet wobei das Dämpferausgangsteil mit dem Turbinenrad drehfest verbunden ist. Vorteilhafterweise ist der Pendelflansch axial zwischen dem Turbinenrad und dem Dämpferausgangsteil angeordnet.

In einer weiteren Ausführungsform der Erfindung sind das Turbinenrad, der Pendelflansch und das Dämpferausgangsteil mit einer gemeinsamen Abtriebsnabe verbunden. Insbesondere wird mindestens eines dieser Teile unmittelbar durch die Abtriebsnabe zentriert. Auch kann die Abtriebsnabe zur radialen Zentrierung des Dämpferzwischenteils und/oder der radialen Zentrierung des axial verschiebbaren Kolbens der Kupplungseinrichtung dienen.

Des Weiteren ist es im Rahmen der Erfindung, dass die Drehmomentübertragungseinrichtung anstatt als hydrodynamischer Drehmomentwandler als hydrodynamische Kupplung, insbesondere eine Föttinger-Kupplung ausgebildet sein kann. Auch kann der Drehmomentwandler entfallen, so dass die Drehmomentübertragungseinrichtung eine Kupplungseinrichtung, einen dieser nachgeschalteten, mehrstufigen Torsionsschwingungsdämpfer und wenigstens ein an dessen Dämpferausgangsteil angebrachtes Fliehkraftpendel aufweist. Die Kupplungseinrichtung kann dabei als Nasskupplung, als Trockenkupplung oder als Doppelkupplung ausgeführt sein.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.

Die Erfindung wird im Folgenden unter Bezugnahme auf die Abbildungen ausführlich beschrieben. Es zeigen im Einzelnen:
- Figur 1:: Halbschnitt einer Drehmomentübertragungseinrichtung nach dem Stand der Technik.
- Figur 2a:: Schematische Darstellung einer Drehmomentübertragungseinrichtung in einer Ausführungsform der Erfindung.
- Figur 2b:: Schematische Darstellung einer Drehmomentübertragungseinrichtung in einer weiteren Ausführungsform der Erfindung.
- Figur 2c:: Schematische Darstellung einer Drehmomentübertragungseinrichtung in einer weiteren Ausführungsform der Erfindung.
- Figur 3:: Halbschnitt eines Ausschnitts einer Drehmomentübertragungseinrichtung in einer Ausführungsform der Erfindung.
- Figur 4:: Räumliche Darstellung des in Figur 3 gezeigten Teiles der Drehmomentübertragungseinrichtung.
- Figur 5:: Halbschnitt eines Ausschnitts einer Drehmomentübertragungseinrichtung in einer weiteren Ausführungsform der Erfindung.

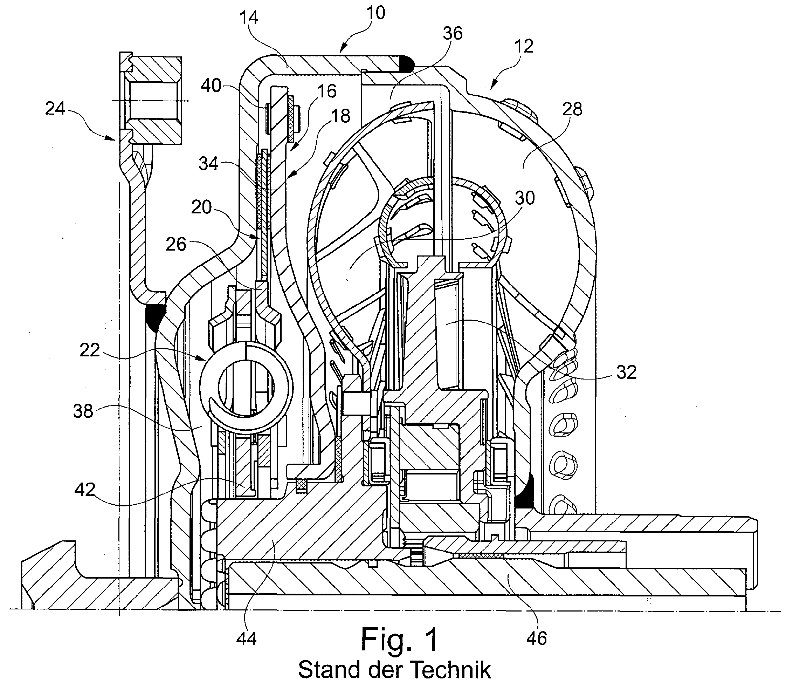

In Figur 1 ist eine Drehmomentübertragungseinrichtung 10 nach dem Stand der Technik dargestellt. Innerhalb eines Gehäuses 14 der als hydrodynamischer Drehmomentwandler 12 ausgeführten Drehmomentübertragungseinrichtung 10 sind eine Überbrückungskupplung 16 und ein mit dem Kupplungsausgang 20 verbundener einstufig ausgebildeter Torsionsschwingungsdämpfer 22 angeordnet. Die Überbrückungskupplung 16 kann im geschlossenen oder schlupfenden Zustand der Kupplungseinrichtung 18 ein antriebsseitig, beispielsweise von einer Brennkraftmaschine über ein Mitnehmerelement 24 auf das Gehäuse 14 übertragenes Drehmoment über den Kupplungsausgang 20 auf ein Dämpfereingangsteil 26 des Torsionsschwingungsdämpfers 22 weiterleiten. Dabei kann durch die Funktion der Überbrückungskupplung 16 ein über ein an dem Gehäuse befestigtes Pumpenrad 28 und über ein Fluid an ein Turbinenrad 30 über die Wirkung eines Leitrads 32 übertragenes Drehmoment umgangen oder teilweise umgeleitet werden, womit von der Antriebsseite eingeleitete Torsionsschwingungen an dem Dämpfereingangsteil 26 anliegen und durch die Wirkung des Torsionsschwingungsdämpfers 22 verringert werden können.

Die Darstellung in Figur 1 zeigt einen Zweikanal-Drehmomentwandler, wobei der axial verschiebbare Kolben 34 der Überbrückungskupplung 16 im Wesentlichen eine Trennung zweier Kammern 36, 38 innerhalb des Gehäuses 14 bewirken kann. Die axiale Bewegung des Kolbens 34 wird über Druckunterschiede zwischen den axialen Seitenflächen des Kolbens 34, das bedeutet in der ersten und zweiten Kammer 36, 38 in Verbindung mit der Wirkung der Rückstellkraft von in einem radial äußeren Bereich des Kolbens 34 angeordneter und den Kolben 34 mit dem Gehäuse 14 verbindende Blattfedern 40 bewirkt. Das Turbinenrad 28 und das Dämpferausgangsteil 42 sind mit einer Abtriebsnabe 44 drehfest verbunden, wobei die Abtriebsnabe 44 mit einer Getriebeeingangswelle 46 über eine Verzahnung drehfest verbindbar ist.

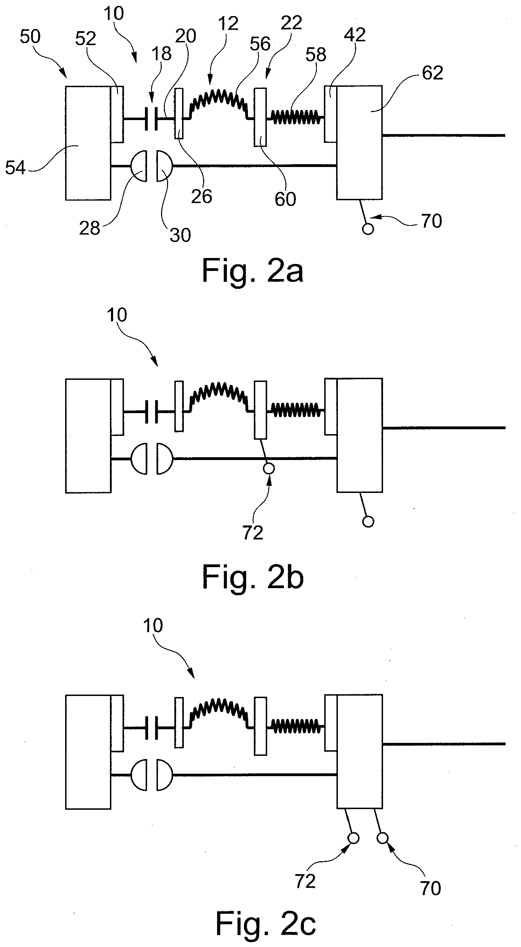

Figur 2a zeigt eine schematische Darstellung einer exemplarischen Drehmomentübertragungseinrichtung 10, wobei die Darstellung der Elemente symbolischen Charakter hat und deren Größe und Form nicht zwingend in Verbindung mit dem tatsächlichen Aussehen der Elemente stehen. Die Antriebsseite 50 der Drehmomentübertragungseinrichtung 10 in Form des Kupplungseingangs 52 der Kupplungseinrichtung 18 sowie des Pumpenrads 28 des hydrodynamischen Drehmomentwandlers 12 ist mit einer Brennkraftmaschine 54 verbunden. Die Kupplungseinrichtung 18 ist als Überbrückungskupplung 16 zur wahlweisen Überbrückung oder teilweisen Umleitung der über das Pumpenrad 28 und das Turbinenrad 30 stattfindenden Drehmomentübertragung ausgeführt, deren Kupplungsausgang 20 mit einem Dämpfereingangsteil 26 eines zweistufigen Torsionsschwingungsdämpfers 22 verbunden ist. Das Dämpfereingangsteil 26 ist über die Wirkung erster Energiespeicherelemente 56 mit einem Dämpferzwischenteil 60 und dieses wiederum über die Wirkung zweiter Energiespeicherelemente 58 mit einem Dämpferausgangsteil 42 in Reihe verbunden. Das Dämpferausgangsteil 42 ist drehfest an dem Turbinenrad 30 angeordnet und mit einer Abriebsseite 62 verbunden und zur Aufnahme eines drehzahladaptiven Fliehkraftpendels 70 vorgesehen. Figur 2b zeigt ähnlich zur Abbildung in Figur 2a eine schematische Darstellung einer Drehmomentübertragungseinrichtung 10 in einer Ausführungsform der Erfindung. Im Unterschied zur Figur 2a ist an dem Dämpferzwischenteil 60 ein weiteres Fliehkraftpendel 72 angeordnet.

Figur 2c zeigt ähnlich zur Abbildung in Figur 2a eine schematische Darstellung einer weiteren exemplarischen Drehmomentübertragungseinrichtung 10. Im Unterschied zur Figur 2a sind an dem Dämpferausgangsteil 58 zwei Fliehkraftpendel 70, 72 angeordnet.

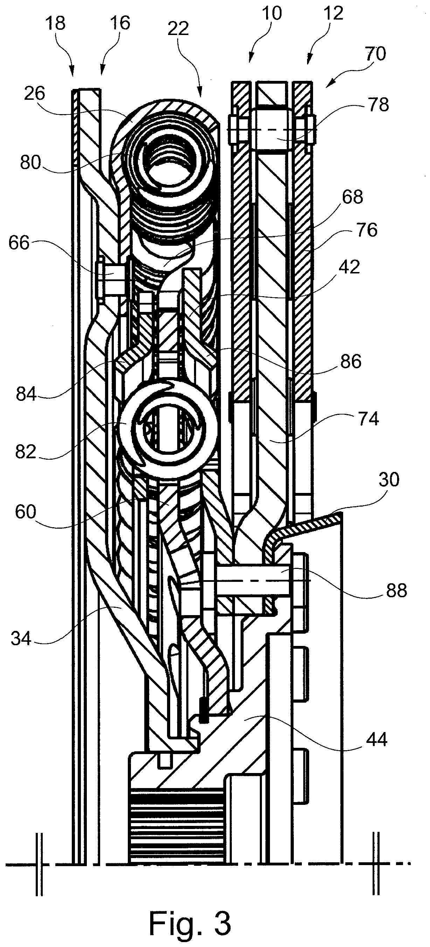

In Figur 3 ist ein Halbschnitt eines Ausschnitts einer Drehmomentübertragungseinrichtung 10 in einer Ausführungsform der Erfindung dargestellt. Der Ausschnitt zeigt im Wesentlichen die Kupplungseinrichtung 18, den Torsionsschwingungsdämpfer 22 und das Fliehkraftpendel 70. Die als Überbrückungskupplung 16 ausgestaltete Kupplungseinrichtung 18, der Torsionsschwingungsdämpfer 22 und das Fliehkraftpendel 70 sind dabei in einem mit Fluid gefüllten Gehäuse eines hydrodynamischen Drehmomentwandlers 12 angeordnet. Die Überbrückungskupplung 16 weist einen axial verschiebbaren Kolben 34 auf, der eine Abdichtung zweier Kammern des Zweikanal-Drehmomentwandlers in dem Gehäuse bewirken kann und durch dessen axiale Bewegung die Überbrückungskupplung 16 geschlossen, offen oder schlupfend betrieben werden kann.

In einem radial äußeren Bereich des Kolbens 34 ist ein Dämpfereingangsteil 26 mit diesem über eine Nietverbindung 66 befestigt, wobei das Dämpfereingangsteil 26 über radial außen liegende, erste Energiespeicherelemente 80 mit einem gegenüber dem Dämpfereingangsteil 26 begrenzt verdrehbaren Dämpferzwischenteil 60 verbunden ist. Dabei umschließt das Dämpfereingangsteil 26 die ersten Energiespeicherelemente 80, beispielsweise Bogenfedern umfangsseitig zur radialen und axialen Sicherung derselben. An einer Umfangsseite werden die ersten Energiespeicherelemente 80 durch das Dämpfereingangsteil 26 beaufschlagt wobei deren Kraftweiterleitung an dem anderen umfangsseitigen Ende der ersten Energiespeicherelemente 80 durch ein an dem Dämpferzwischenteil 60 angebrachtes Beaufschlagungselement 68 abgegriffen werden kann. Das Dämpferzwischenteil 60 ist als scheibenartiges Teil ausgeführt und radial innen an einer Abtriebsnabe 44 gegenüber dieser verdrehbar aufgenommen und zentriert.

Das Dämpferzwischenteil 60 ist wiederum über zweite Energiespeicherelemente 82, beispielsweise Druckfedern mit einem aus zwei benachbarten und das Dämpferzwischenteil 60 zwischen sich aufnehmenden Dämpferscheibenteilen 84, 86 bestehenden Dämpferausgangsteil 42 wirksam verbunden. Das in Richtung Turbinenrad 30 des Drehmomentwandlers 12 angeordnete Dämpferscheibenteil 86 ist über ein Verbindungselement 88, beispielsweise einen Abstandsbolzen oder ein Nietelement mit einem Pendelflansch 74 verbunden. Der Pendelflansch 74 ist im Wesentlichen als scheibenartiges Teil ausgeführt und erstreckt sich axial benachbart zu dem Torsionsschwingungsdämpfer 22, wobei der Pendelflansch 74 in einem radial äußeren Bereich beidseitig angeordnete Pendelmassen 76 aufnimmt. Die Pendelmassen 76 sind über Abstandsbolzen 78 miteinander befestigt und zusammen mit diesen gegenüber dem Pendelflansch 74 entlang von Führungsbahnen begrenzt verlagerbar. Dazu können zusätzlich in Ausschnitten der Pendelmassen 76 und des Pendelflansches 74 aufgenommene Wälzkörper eingebracht sein um die Führungsbahn zu definieren.

An dem Pendelflansch 74 ist das Turbinenrad 30 des Drehmomentwandlers 12 drehfest verbunden. Der Pendelflansch 74 und das Turbinenrad 30 sind auf einer Abtriebsnabe 44 aufgenommen und zentriert. Die Abtriebsnabe 44 ist über eine Verzahnung mit einer Getriebeeingangswelle verbindbar.

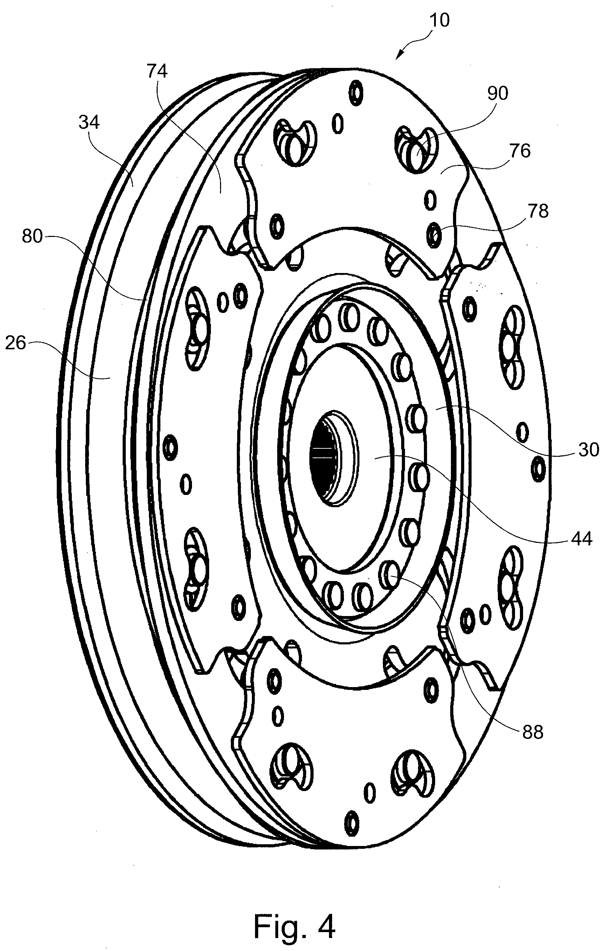

Figur 4 zeigt eine räumliche Darstellung des in Figur 3 gezeigten Teiles der Drehmomentübertragungseinrichtung 10. In dieser Ansicht ist die Anordnung der Pendelmassen 76 an dem Pendelflansch 74 erkennbar. Umfangsseitig sind vier Pendelmassen 76 jeweils an jeder axialen Seite des Pendelflansches 74 über Wälzkörper 90 gegenüber diesem begrenzt verlagerbar aufgenommen. Die Abstandsbolzen 78 dienen der Befestigung zweier gegenüberliegender Pendelmassen 76 zu einem Pendelmassenpaar.

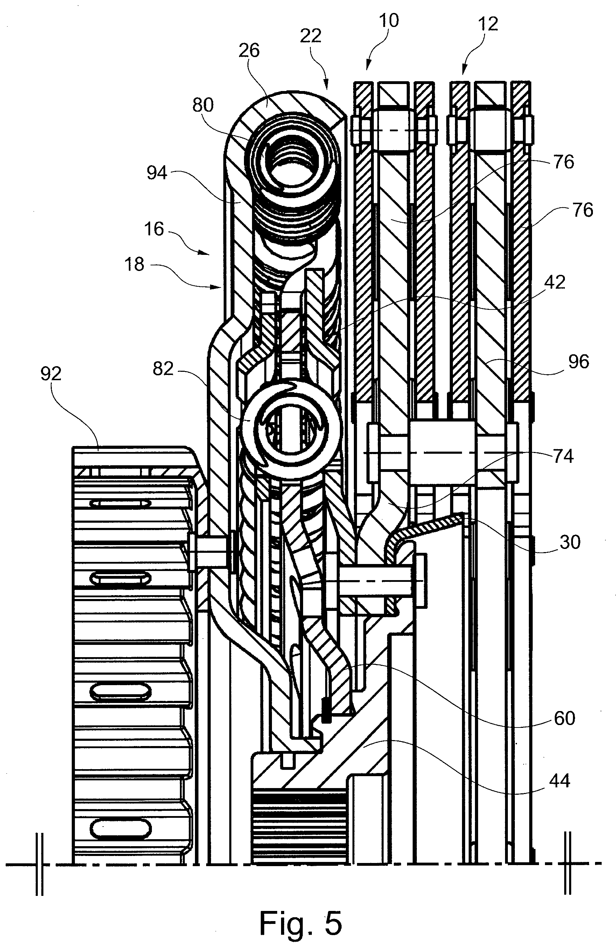

In Figur 5 ist ein Halbschnitt eines Ausschnitts einer Drehmomentübertragungseinrichtung 10 in einer weiteren Ausführungsform der Erfindung dargestellt. Die als Überbrückungskupplung 16 ausgestaltete und in einem Gehäuse eines hydrodynamischen Drehmomentwandlers 12 eingebrachte Kupplungseinrichtung 18 weist einen Innenlamellenträger 92 zur Aufnahme von hier nicht gezeigten Reiblamellen auf. Der Innenlamellenträger 92 ist mit einem Dämpferseitenteil 94 verbunden und dieses ist wiederum an dem Dämpfereingangsteil 26 befestigt. Auch ist es denkbar, dass das Dämpferseitenteil 94 und das Dämpfereingangsteil 26 als ein Teil ausgeführt sind.

Der zweistufige Torsionsschwingungsdämpfer 22 weist ein mit dem Dämpfereingangsteil 26 über erste Energiespeicherelemente 80 verbundenes Dämpferzwischenteil 60 und ein über die Wirkung zweiter Energiespeicherelemente 82 mit dem Dämpferzwischenteil 60 verbundenes Dämpferausgangsteil 42 auf. Das Dämpferausgangsteil 42 ist an einem Pendelflansch 74 befestigt wobei der Pendelflansch 74 in seinem radial äußeren Bereich axial beidseitig und gegenüber diesem begrenzt verlagerbare Pendelmassen 76 aufnimmt. In einem radial inneren Bereich des Pendelflansches 74 ist ein weiterer Pendelflansch 96 axial beabstandet und benachbart zu diesem befestigt, der weitere beidseitig des Pendelflansches 96 paarweise angeordnete Pendelmassen 76 aufnimmt. Der Pendelflansch 74 ist an einem Turbinenrad 30 des hydrodynamischen Drehmomentwandlers 12 befestigt und an einer Abtriebsnabe 44 zentriert aufgenommen.

## Patentansprüche

1. Drehmomentübertragungseinrichtung (10) mit einem antriebsseitig verbundenen Gehäuse (14) und einer darin angeordneten Kupplungseinrichtung (18) sowie einem dieser nachgeschalteten Torsionsschwingungsdämpfer (22) mit wenigstens einem Dämpfereingangsteil (26), wenigstens ein gegenüber dem Dämpfereingangsteil (26) über die Wirkung von ersten Energiespeicherelementen (80) begrenzt verdrehbares Dämpferzwischenteil (60) sowie ein über die Wirkung von zweiten Energiespeicherelementen (82) gegenüber dem Dämpferzwischenteil (60) begrenzt verdrehbares und abtriebsseitig verbundenes Dämpferausgangsteil (42) aufweisende Dämpferstufen, **dadurch gekennzeichnet, dass** an dem Dämpferausgangsteil (42) ein drehzahladaptives Fliehkraftpendel (70) mit einer gegenüber einem aus dem Dämpferausgangsteil (42) integral ausgebildeten oder an diesem befestigten Pendelflansch (74) begrenzt verlagerbaren Pendelmasse (76) angeordnet ist, wobei ein weiteres Fliehkraftpendel (72) an dem Dämpferzwischenteil (60) oder dem Dämpfereingangsteil (26) angeordnet ist.

2. Drehmomentübertragungseinrichtung (10) nach Anspruch 1, **dadurch gekennzeichnet, dass** der Pendelflansch (74) axial benachbart zu dem Torsionsschwingungsdämpfer (22) angeordnet ist.

3. Drehmomentübertragungseinrichtung (10) nach einem der Ansprüche 1 oder 2, **dadurch gekennzeichnet, dass** wenigstens zwei Fliehkraftpendel (70, 72) an dem Dämpferausgangsteil (42) angeordnet sind, insbesondere über axial benachbart angeordnete Pendelflansche (74, 96).

4. Drehmomentübertragungseinrichtung (10) nach Anspruch 1, **dadurch gekennzeichnet, dass** der Pendelflansch des weiteren Fliehkraftpendels (72) aus dem Dämpferzwischenteil (60) oder dem Dämpfereingangsteil (26) gebildet wird.

5. Drehmomentübertragungseinrichtung (10) nach einem der Ansprüche 1 bis 4, **dadurch gekennzeichnet, dass** die ersten Energiespeicherelemente (80) gegenüber den zweiten Energiespeicherelementen (82) radial versetzt angeordnet sind.

6. Drehmomentübertragungseinrichtung (10) nach einem der Ansprüche 1 bis 5, **dadurch gekennzeichnet, dass** die Drehmomentübertragungseinrichtung (10) als hydrodynamischer Drehmomentwandler (12) mit einem in einem Gehäuse (14) angeordneten Pumpenrad (28) sowie einem Turbinenrad (30) und gegebenenfalls einem Leitrad (32) ausgestaltet und das Dämpferausgangsteil (42) mit dem Turbinenrad (30) drehfest verbunden ist.

7. Drehmomentübertragungseinrichtung (10) nach Anspruch 6, **dadurch gekennzeichnet, dass** der Pendelflansch (74) des am Dämpferausgangsteil angeordneten Fliehkraftpendels (70) axial zwischen dem Turbinenrad (30) und dem Dämpferausgangsteil (42) angeordnet ist.

8. Drehmomentübertragungseinrichtung (10) nach einem der Ansprüche 6 bis 7, **dadurch gekennzeichnet, dass** das Turbinenrad (30) und der Pendelflansch (74) des am Dämpferausgangsteil angeordneten Fliehkraftpendels (70) und das Dämpferausgangsteil (42) mit einer gemeinsamen Abtriebsnabe (44) verbunden sind.

9. Drehmomentübertragungseinrichtung (10) nach Anspruch 8, **dadurch gekennzeichnet, dass** die Abtriebsnabe (44) zur radialen Zentrierung des Dämpferzwischenteils (60) und/oder der radialen Zentrierung des axial verschiebbaren Kolbens (34) der Kupplungseinrichtung (18) dient.

## Claims

1. Torque transmitter (10) comprising a housing (14) connected on the drive side and a coupling device (18) arranged in the housing, and a torsional vibration damper (22), which is connected downstream of the coupling device and comprises damper stages having at least one damper input part (26), at least one damper intermediate part (60), which can be turned to a limited extent with respect to the damper input part (26) by means of the effect of first energy storage elements (80), and also a damper output part (42), which can be turned to a limited extent with respect to the damper intermediate part (60) by means of the effect of second energy storage elements (82) and is connected on the driven side, **characterized in that** arranged on the damper output part (42) is a speed-adaptive centrifugal pendulum (70) with a pendulum mass (76) that is displaceable to a limited extent with respect to a pendulum flange (74) integrally formed from the damper output part (42) or fastened thereto, wherein a further centrifugal pendulum (72) is arranged on the damper intermediate part (60) or the damper input part (26).

2. Torque transmitter (10) according to Claim 1, **characterized in that** the pendulum flange (74) is arranged axially adjacent to the torsional vibration damper (22).

3. Torque transmitter (10) according to either of Claims 1 and 2, **characterized in that** at least two centrifugal pendulums (70, 72) are arranged on the damper output part (42), in particular by means of axially adjacently arranged pendulum flanges (74, 96) .

4. Torque transmitter (10) according to Claim 1, **characterized in that** the pendulum flange of the further centrifugal pendulum (72) is formed by the damper intermediate part (60) or the damper input part (26).

5. Torque transmitter (10) according to one of Claims 1 to 4, **characterized in that** the first energy storage elements (80) are arranged radially offset with respect to the second energy storage elements (82).

6. Torque transmitter (10) according to one of Claims 1 to 5, **characterized in that** the torque transmitter (10) is designed as a hydrodynamic torque converter (12) with a pump impeller (28) and a turbine wheel (30), and possibly a stator (32), arranged in a housing (14), and the damper output part (42) is connected to the turbine wheel (30) for rotation therewith.

7. Torque transmitter (10) according to Claim 6, **characterized in that** the pendulum flange (74) of the centrifugal pendulum (70) arranged on the damper output part is arranged axially between the turbine wheel (30) and the damper output part (42).

8. Torque transmitter (10) according to either of Claims 6 and 7, **characterized in that** the turbine wheel (30) and the pendulum flange (74) of the centrifugal pendulum (70) arranged on the damper output part and the damper output part (42) are connected to a common output hub (44).

9. Torque transmitter (10) according to Claim 8, **characterized in that** the output hub (44) serves for the radial centring of the damper intermediate part (60) and/or the radial centring of the axially displaceable piston (34) of the coupling device (18).

## Revendications

1. Dispositif convertisseur de couple (10) avec un boîtier (14) relié côté entraînement et un système de couplage (18) disposé dans celui-ci, ainsi qu'avec un amortisseur de vibrations de torsion (22) placé après celui-ci avec des étages d'amortisseur présentant au moins une partie d'entrée d'amortisseur (26), au moins une partie intermédiaire d'amortisseur (60) pouvant tourner de façon limitée par rapport à la partie d'entrée d'amortisseur (26) par l'action de premiers éléments d'accumulation d'énergie (80) ainsi qu'une partie de sortie d'amortisseur (42) pouvant tourner de façon limitée par rapport à la partie intermédiaire d'amortisseur (60) par l'action de deuxièmes éléments d'accumulation d'énergie (82) et reliée côté sortie, **caractérisé en ce qu'**un pendule centrifuge adaptable en vitesse de rotation (70) est disposé sur la partie de sortie d'amortisseur (42) avec une masse pendulaire (76) déplaçable de façon limitée par rapport à une bride pendulaire (74) formée intégralement à partir de la partie de sortie d'amortisseur (42) ou fixée à celle-ci, dans lequel un autre pendule centrifuge (72) est disposé sur la partie intermédiaire d'amortisseur (60) ou sur la partie d'entrée d'amortisseur (26).

2. Dispositif convertisseur de couple (10) selon la revendication 1, **caractérisé en ce que** la bride pendulaire (74) est disposée axialement à proximité de l'amortisseur de vibrations de torsion (22).

3. Dispositif convertisseur de couple (10) selon une des revendications 1 ou 2, **caractérisé en ce qu'**au moins deux pendules centrifuges (70, 72) sont disposés sur la partie de sortie d'amortisseur (42), en particulier par des brides pendulaires (74, 96) disposées axialement à proximité.

4. Dispositif convertisseur de couple (10) selon la revendication 1, **caractérisé en ce que** la bride pendulaire de l'autre pendule centrifuge (72) est formée à partir de la partie intermédiaire d'amortisseur (60) ou de la partie d'entrée d'amortisseur (26).

5. Dispositif convertisseur de couple (10) selon l'une quelconque des revendications 1 à 4, **caractérisé en ce que** les premiers éléments d'accumulation d'énergie (80) sont disposés en décalage radial par rapport aux deuxièmes éléments d'accumulation d'énergie (82).

6. Dispositif convertisseur de couple (10) selon l'une quelconque des revendications 1 à 5, **caractérisé en ce que** le dispositif convertisseur de couple (10) est constitué par un convertisseur de couple hydrodynamique (12) avec une roue de pompe (28) disposée dans un boîtier (14) ainsi qu'une roue de turbine (30) et éventuellement une roue directrice (32) et la partie de sortie d'amortisseur (42) est assemblée sans rotation à la roue de turbine (30).

7. Dispositif convertisseur de couple (10) selon la revendication 6, **caractérisé en ce que** la bride pendulaire (74) du pendule centrifuge (70) disposé sur la partie de sortie d'amortisseur est disposée axialement entre la roue de turbine (30) et la partie de sortie d'amortisseur (42).

8. Dispositif convertisseur de couple (10) selon une des revendications 6 à 7, **caractérisé en ce que** la roue de turbine (30) et la bride pendulaire (74) du pendule centrifuge (70) disposé sur la partie de sortie d'amortisseur et la partie de sortie d'amortisseur (42) sont reliées par un moyeu de sortie commun (44).

9. Dispositif convertisseur de couple (10) selon la revendication 8, **caractérisé en ce que** le moyeu de sortie (44) sert pour le centrage radial de la partie intermédiaire d'amortisseur (60) et/ou pour le centrage radial du piston déplaçable axialement (34) du système de couplage (18).
